# EUROPÄISCHE PATENTANMELDUNG

(11) **EP 4 721 891 A1**
(43) Veröffentlichungstag der Anmeldung: **08.04.2026**
(21) Anmeldenummer: 24204071.5
(22) Anmeldetag: 01.10.2024
(51) Int. Cl.: B21D 11/08, B21D 35/00, B21D 53/88, B23P 15/00, B62D 33/06, E04C 3/04

(54) **FAHRZEUG MIT EINER KABINE, DIESE KABINE MIT EINEM PROFIL UND DIESES PROFIL**

(71) Anmelder: voestalpine Krems GmbH, 3500 Krems an der Donau (AT)
(72) Erfinder: Sauter, Markus, 3471 Großriedenthal (AT); Sprinzl, Roman, 2013 Göllersdorf (AT); Mayer, Florian, 3500 Krems an der Donau (AT); Fuchs, Roland, 3492 Etsdorf (AT); Glaser, Clemens, 3443 Henzing (AT); Schuscha, Manuel, 3425 Langenlebarn (AT)
(74) Vertreter: Jell, Friedrich

(57) **Zusammenfassung**

Es wird Fahrzeug (2) mit einer Kabine (1), diese Kabine (1) mit einem Profil (4) und dieses Profil (4) gezeigt. Um bei einfacher Herstellbarkeit hohe Formgenauigkeit am Profil (4) zu ermöglichen, wird vorgeschlagen, dass das Außenprofil (7) im gekrümmten und/oder geknickten Profilabschnitt (6) zumindest eine, insbesondere mit zumindest einem Zusatzwerkstoff hergestellte, stoffschlüssige Verbindung (10a) und gegebenenfalls eine formschlüssige Verbindung (10b) zwischen Innen- und Außenprofil (7, 8) aufweist, welche Verbindung (10a, 10b) zumindest im Bereich einer das Au-ßenprofil (7) durchdringenden Materialausnehmung (9a1 bis 9a8) eingebracht ist.

## Beschreibung

Die Erfindung betrifft ein Fahrzeug, eine Kabine mit einem Profil und dieses Profil, insbesondere Hohlprofil, das zumindest einen in dessen Längsrichtung gekrümmt und/oder geknickt verlaufenden Profilabschnitt aufweist, mit einem über den gekrümmt und/oder geknickt verlaufenden Profilabschnitt des Profils verlaufenden Au-ßenprofil und mit einem zumindest abschnittsweise im gekrümmten und/oder geknickten Profilabschnitt und innerhalb des Außenprofils vorgesehenen Innenprofil.

Mechanische Verstärkungen von Profilen, beispielsweise auch in deren in Längsrichtung gekrümmt und/oder geknickt verlaufenden Profilabschnitten, sind aus dem Stand der Technik bekannt (EP1516802B1). Diese Verstärkung kann beispielsweise durch ein in ein Außenprofil aus Metall eingesetztes Innenprofil aus Metall ermöglicht werden. Abhängig vom einzuhaltenden Krümmungsradius im gekrümmten und/oder geknickten Profilabschnitt sowie jenen zu gewährleistenden mechanischen Eigenschaften kommt es bei der Herstellung zu unerwünschten Ausbeulungen und/oder Falten am Profil, was zu unkontrollierten Eigenschaften führen kann. Die Herstellung derartiger Profile ist daher besonders aufwendig und kostenintensiv.

Die Erfindung hat sich daher die Aufgabe gestellt, ein Profil zu schaffen, das nicht nur mechanisch besonders belastbar ist, sondern sich auch reproduzierbar, beispielsweise auch kostengünstig, herstellen lässt.

Die Erfindung löst die gestellte Aufgabe durch die Merkmale des Anspruchs 1.

Weist das Außenprofil im gekrümmten und/oder geknickten Profilabschnitt zumindest eine stoffschlüssige Verbindung zwischen Innen- und Außenprofil auf, kann das Profil höhere mechanische Belastung standfest aufnehmen - dies weiter verbessert, wenn das Außenprofil in diesem Profilabschnitt gegebenenfalls (und damit optional) auch noch eine formschlüssige Verbindung aufweist.

Ist diese stoffschlüssige und gegebenenfalls formschlüssige Verbindung zumindest abschnittsweise im Bereich einer das Außenprofil durchdringenden Materialausnehmung eingebracht, kann unter anderem eine mechanische Schwächung des Profils durch solch eine Materialausnehmung ausgeglichen werden. Hierbei ist vorstellbar, dass diese Materialausnehmung gegebenenfalls (und damit optional) das Innenprofil auch durchdringt.

Vorteilhafterweise kann diese Materialausnehmung, die möglicherweise unter der stoffschlüssigen Verbindung verschwindet, die Herstellung des gekrümmten und/oder geknickten Profilabschnitts erheblich erleichtern. Durch diese Ausnehmung kann sich beim Biegen das Fließen der Materialien erleichtern, was wiederum unerwünschte Ausbeulungen und Falten in diesem Profilabschnitt vermeidet. Mit einer Beeinträchtigung der Standfestigkeit des Profils muss damit nicht gerechnet werden. Ferner ist das Profil einfacher und damit kostengünstiger herstellbar, auch bei hoher Formgenauigkeit sowie mechanischer Belastbarkeit.

Das erfindungsgemäße Profil kann nicht nur reproduzierbar hergestellt werden, sondern besitzt auch eine herausragende mechanische Belastbarkeit und Stabilität.

Hierbei ist denkbar, dass das Innen- und/oder Außenprofil beispielsweise ein, insbesondere geschlossenes, Hohlprofil ist. Vorzugsweise ist diese stoffschlüssige Verbindung mit zumindest einem Zusatzwerkstoff hergestellt, um hier eine materialausgleichende Wirkung zu erzielen.

Vorzugsweise ist die stoffschlüssige Verbindung eine Schweißnaht, um im gekrümmten und/oder geknickten Profilabschnitt eine verbessert strukturelle Integrität und Festigkeit zu ermöglichen. Beispielsweise kann sich hierzu eine schmelzgeschweißte Schweißnaht handeln. Vorstellbar ist eine Schlitznaht. Es kann sich auch um eine volle Schlitznaht handeln, um das Innen- und Außenprofil mechanisch standfest miteinander zu verbinden.

Alternativ dazu ist auch eine Lötverbindung als stoffschlüssige Verbindung vorstellbar. Auch kann sich eine Klebeverbindung solch eine stoffschlüssige Verbindung standfest schaffen. Bei dem Klebstoff handelt es sich beispielsweise um einen Einkomponentenklebstoff beispielsweise auf Methylacrylatbasis oder aber um einen Zweikomponentenklebstoff beispielsweise auf Epoxydharzbasis. Zusätzlich oder alternativ ist auch die Verwendung eines anaerob oder unter Wärme aushärtenden Klebstoffs vorstellbar.

Vorzugweise weist die formschlüssige Verbindung ein Verbindungselement auf, um damit Innen- und Außenprofil fest miteinander zu verbinden. Dieses Verbindungselement kann ein Stift oder eine Niete sein.

Vorstellbar ist auch, dass diese formschlüssige Verbindung eine in das Innenprofil eingreifende Materialzunge des Außenprofils aufweist. Diese Materialzunge kann beispielsweise zur Positionierung des Innenprofils vor dem Biegen und/oder Verschwei-ßen dienen.

Beispielsweise weist die Materialausnehmung zumindest abschnittsweise einen zur Längsrichtung des Profils geneigten Verlauf auf. Damit reduzieren sich jene beim Biegen auftretenden Biegespannungen erheblich, was zu einem präziseren und gleichmäßigeren gemeinsamen Umformen von Innen- und Außenprofil führen kann. Dies insbesondere dann, wenn die Materialausnehmung zumindest abschnittsweise einen quer zur Längsrichtung des Profils geneigten Verlauf aufweist. Dies ermöglicht beispielsweise die Herstellung eines exakten Profils mit komplexen Geometrien.

Vorstellbar ist weiter, dass die Materialausnehmung zumindest an der Innenseite des gekrümmten und/oder geknickten Profilabschnitts des Profils, insbesondere vollständig, verlaufend vorgesehen ist. Damit kann beispielsweise im engsten Krümmungsbereich des Profils Ausbeulungen und/oder Falten reduziert und eine Gefährdung der Standfestigkeit des Profils vermieden werden.

Dies umso mehr, wenn die Materialausnehmung an der betreffenden Seitenfläche an die Innenfläche des gekrümmten und/oder geknickten Profilabschnitts anschließt und in Richtung der Außenfläche des gekrümmten und/oder geknickten Profilabschnitts verläuft.

Vorzugsweise endet die Materialausnehmung mit einem ersten Abstand vor der Außenfläche. Alternativ ist vorstellbar, dass die Materialausnehmung im Übergangsbereich zu dieser Außenfläche des gekrümmten und/oder geknickten Profilabschnitts endet, um auch am äußeren Krümmungsradius ein Fließen des Materials weiter erleichtern zu können.

Die Herstellung des Profils kann erleichtert werden, wenn die Materialausnehmung als Schlitz ausgeführt ist. Zudem kann dies auch das stoffschlüssige Fügen erleichtern, und damit die Reproduzierbarkeit in der Herstellung des Profils weiter verbessern.

Beispielsweise kann auch diese Materialausnehmung u-förmig am Profil verlaufend ausgebildet sein.

Engere Radien im gekrümmten Bereich können standfest erfüllt werden, wenn mehrere Materialausnehmungen auf einem zweiten Abstand nebeneinander, insbesondere parallel, verlaufend vorgesehen sind.

Vorstellbar ist auch, dass die Materialausnehmung über ihre Länge einen im Wesentlichen gleiche Öffnungsbreite aufweist. Dies erleichtert das Vorsehen einer stoffschlüssigen Verbindung. Zudem kann dies auch einen gleichmäßigen Spannungseintrag am Profil für verbesserte mechanischen Kennwerte gewährleisten. Vorteilhaft ist dies über die gesamte Länge der Materialausnehmung der Fall.

Eine Formgenauigkeit am Profil kann erhöht werden, wenn die Materialausnehmung in deren Verlauf von zumindest einem, vom betreffenden Außenprofil oder Innenprofil ausgeformten, insbesondere frei, auskragenden Distanzhalter unterbrochen wird. Damit kann nämlich reproduzierbar ein gewünscht gekrümmter Verlauf des Profils voreingestellt werden, nämlich durch Anschlag des Distanzhalters begrenzt werden. Dies kann nicht nur das Biegen des Profils, sondern auch das stoffschlüssige Fügen weiter erleichtern.

Dies umso mehr, wenn die Verbindung zudem im Bereich einer das Innenprofil durchdringenden Materialausnehmung eingebracht ist, die direkt an die Materialausnehmung des Außenprofils anschließt. Zudem kann dies ein standfestes Verschweißen der beiden Profile gewährleisten. Dies beispielsweise durch eine Doppelschlitznaht, welche auch -wie im Ausführungsbeispiel dargestellt- durchgeschweißt ist.

Die Anbindung zwischen Innen- und Außenprofil kann weiter verbessert werden, wenn die stoffschlüssige Verbindung die Materialausnehmung in deren Erstreckung und/oder Tiefe ausfüllt. Dies wird weiter verbessert, indem die stoffschlüssige Verbindung diese Materialausnehmung in deren Erstreckung und/oder Tiefe vollständig ausfüllt.

Entsprechend den zu erreichenden mechanischen Kennwerten ist vorstellbar, dass das Innenprofil im gekrümmten und/oder geknickten Profilabschnitt durchgehend verlaufend ist. Gegebenenfalls kann in zumindest einen, insbesondere in beiden, daran anschließenden in Längsrichtung des Profils gerade verlaufenden Profilabschnitt des Profils vorkragen. Dies, um damit beispielsweise den Übergangsbereich zwischen den Profilbereichen weiter zu verstärken.

Vorzugsweise wird das erfindungsgemäße Profil bei einer Kabine verwendet. Hier kann das Profil als Teil eines Kabinenrahmens der Kabine verwendet werden - beispielsweise als Säule. Diese Säule kann auch eine B-Säule sein.

Beispielsweise kann dieses Profil oder diese Kabine bei einem Fahrzeug verwendet werden. Als Fahrzeug ist beispielsweise ein Traktor vorstellbar.

Die Erfindung hat sich zudem die Aufgabe gestellt, die Herstellung eines gegenüber mechanischen Kräften standfesten Profils zu erleichtern.

Die Erfindung löst die gestellte Aufgabe durch die Merkmale des Anspruchs 15.

Indem ein Außenprofil mit zumindest eine dieses durchdringende Materialausnehmung und ein Innenprofil mit gegebenenfalls zumindest eine dieses durchdringende Materialausnehmung bereitgestellt oder hergestellt werden, das Innenprofil in das Au-ßenprofil eingesetzt, insbesondere eingeschoben, wird, dann das Außenprofil und Innenprofil derart gemeinsam umgeformt, insbesondere gebogen, werden, dass sich am Profil ein in dessen Längsrichtung gekrümmt und/oder geknickt verlaufender Profilabschnitt mit der Materialausnehmung in diesem Profilabschnitt ausbildet, erleichtert sich letzterer Herstellungsschritt erheblich. Mit einer verminderten Standfestigkeit am Profil ist aber dennoch nicht zu rechnen, da in einem weiteren Schritt an zumindest der Materialausnehmung des Außenprofils zumindest eine stoffschlüssige Verbindung zwischen Innen- und Außenprofil hergestellt wird.

Diese stoffschlüssige Verbindung kann beispielsweise mit zumindest einen Zusatzwerkstoff hergestellt werden.

Ein schnelles, effizientes Verfahren ist damit geschaffen, das auch eine hohe Reproduzierbarkeit aufweisen kann.

Das Verfahren kann reproduzierbarer durchgeführt werden, wenn das Innenprofil im Außenprofil in der Position gesichert ist und erst dann das gemeinsame Umformen durchgeführt wird. Hierzu kann vor dem gemeinsamen Umformen eine formschlüssige Verbindung zwischen dem Innen- und Außenprofil hergestellt werden.

In den Figuren ist beispielsweise der Erfindungsgegenstand anhand eines Ausführungsbeispiels näher dargestellt. Es zeigen
Fig. 1 eine Fahrzeugkabine mit einem erfindungsgemäßen Profil,
Fig. 2 eine Detailansicht auf einen gekrümmten Profilabschnitt des nach Fig. 1 dargestellten Profils,
Fig. 3 eine Detailansicht zu Materialausnehmungen samt Schweißnaht des nach Fig. 2 dargestellten gekrümmten Profilabschnitts und
Fig. 4 eine vergrößerte Draufsicht auf die Materialausnehmung der Fig. 2.

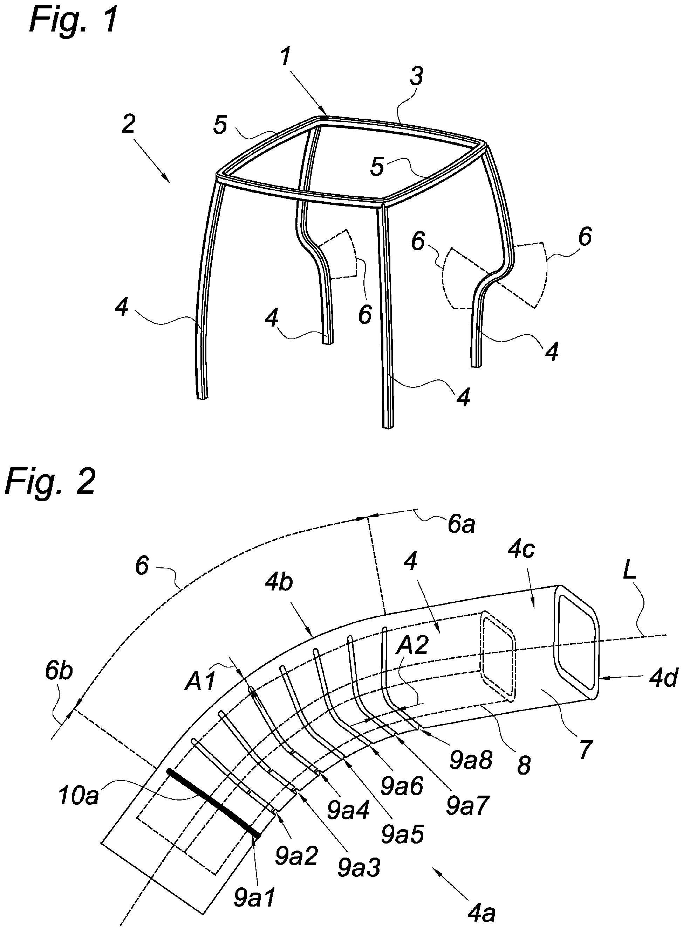

Nach Fig. 1 wird eine Kabine 1 eines als Traktor ausgebildeten Fahrzeugs 2 gezeigt, wobei das Fahrzeug 2 nur teilweise dargestellt ist. Die Kabine 1 weist einen Rahmen 3 mit miteinander verbundenen, beispielsweise verschweißten, Profilen 4, 5 auf. Die Profile 4 sind säulenartige Rahmenteile des Rahmens 3, nämlich eine B-Säule, dar. Die anderen Profile 5 sind Rahmenteile des Rahmens 3, welche die säulenartigen Profile 4 verbinden. Wie zudem der Fig. 1 zu entnehmen ist, weisen die säulenartigen Profile 4 in deren Längsrichtung L jeweils mehrere gekrümmt verlaufende Profilabschnitte 6 auf. Diese gekrümmten Profilabschnitte 6 werden beispielsweise durch ein Biegeverfahren hergestellt.

Im Ausführungsbeispiel ist die Biegelinie, sich erstreckend entlang der Längsrichtung L des Profils 4, kreisbogenförmig gekrümmt verlaufend. Der Profilabschnitt 6 ist daher aufgrund einer gleichbleibenden Krümmung kontinuierlich gekrümmt verlaufend. Es ist aber auch ein nicht dargestellter diskontinuierlich gekrümmt verlaufender Profilabschnitt 6 mit einer in Längsrichtung L verändernden Krümmung vorstellbar. Selbstverständlich ist auch ein kontinuierlich und diskontinuierlich verlaufender Profilabschnitt 6 denkbar, was nicht dargestellt ist. Auch ist ein in Längsrichtung L geknickt verlaufender Profilabschnitt vorstellbar, also jener Profilabschnitt, der den Knick ausbildet, was ebenso nicht dargestellt worden ist.

Die gekrümmten Profilabschnitte 6 sind im Material verstärkt, um die geforderten mechanischen Belastungen zur Sicherstellung der Schutzfunktion der Kabine 1 zu erfüllen.

Hierzu weisen die säulenartigen Profile 4 jeweils in den gekrümmten Profilabschnitten 6 im Außenprofil 7 ein Innenprofil 8 auf, wie dies nach Fig. 2 für alle Profilabschnitte 6 im Detail erkannt werden kann. Das Außenprofil 7 bildet damit zumindest abschnittsweise die Außenseite des Profils 4 aus. Zudem ist das Innenprofil 8 im gesamten gekrümmten Profilabschnitt 6 und innerhalb des Außenprofils 7 vorgesehen. Das Außenprofil 7 verläuft über die gesamte Profillänge des betreffenden Profils 4 und verläuft damit auch über den gekrümmt und/oder geknickt verlaufenden Profilabschnitt 6 des Profils 4. Auch kragt das Innenprofil 8 in beide daran anschließende und in Längsrichtung L des Profils 4 gerade verlaufenden Profilabschnitte 6a, 6b des Profils 4 vor.

Das Profil 4 und damit auch das Außenprofil 8 sind im Ausführungsbeispiel ein geschlossenes Hohlprofil. Ebenso ist das Innenprofil 7 im Ausführungsbeispiel ein geschlossenes Hohlprofil. Im Allgemeinen sind auch andere Profilformen vorstellbar, beispielsweise auch ein offenes Hohlprofil. Offene Hohlprofile können beispielsweise im Querschnitt u-förmig, hutförmig, c-förmig und dergleichen sein.

Um eine formgenaue Herstellung der gekrümmten Profilabschnitte 6 durch Biegung sicherstellen zu können, sind die Profile 4 in den gekrümmten Profilabschnitten 6 besonders ausgeführt. So weist nach Fig. 2 ausschließlich das Außenprofil 7 im gekrümmten Profilabschnitt 6 mehrere dieses Außenprofil 7 durchdringende Materialausnehmungen 9a1 bis 9a8 auf. Damit lässt sich dieser Bereich des Profils 4 formgenau biegen, dies unter Vermeidung von Ausbeulungen und/oder Falten.

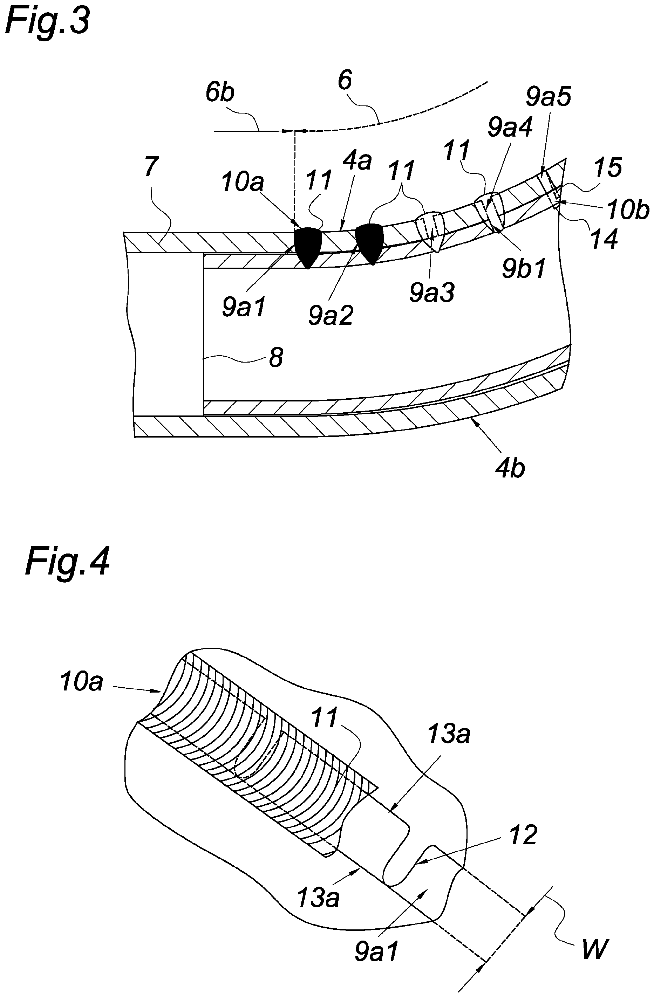

Zudem besteht an jeder dieser Materialausnehmungen 9a1 bis 9a8 je eine stoffschlüssige Verbindung 10a, in Form einer Schweißnaht 11, zwischen Innenprofil 8 und Außenprofil 7, wie in Fig. 2 und im Detail in Fig. 3 zu erkennen ist.

Zum besseren Verständnis wurden diese stoffschlüssige Verbindungen 10a in den Figuren 2 und 3 nicht zu jeder Materialausnehmung 9a1 bis 9a8 eingezeichnet. In Fig. 2 ist lediglich an der Materialausnehmung 9a1 diese stoffschlüssige Verbindung 10a zu erkennen.

In der Fig. 3 ist die stoffschlüssige Verbindung 10a an den Materialausnehmungen 9a1 bis 9a4 zu erkennen, wobei die vor dem Verschweißen bestehenden Materialausnehmungen 9a3 und 9a4 strichliert eingezeichnet worden sind. Es ist aber auch vorstellbar, dass nicht an jeder Materialausnehmungen 9a1 bis 9a8 eine stoffschlüssige Verbindung 10a besteht.

Die Schweißnähte 11 sind im Ausführungsbeispiel je als schmelzgeschweißte und volle Schlitznaht ausgeführt - dies unter Verwendung eines Schweißzusatzwerkstoffs. Damit werden die Materialausnehmungen 9a1 bis 9a8 vollständig in deren Erstreckung und in deren Tiefe ausgefüllt, was beispielsweise die mechanische Stabilität weiter verbessert. Auch kann es sich um eine voll durchgeschweißte Schweißnaht 11, beispielsweise Schlitznaht, handeln. Es ist aber auch eine autogene Schweißnaht vorstellbar, was nicht näher dargestellt worden ist.

Ebenso ist in Fig. 3 eine Materialausnehmungen 9b1 des Innenprofils 7 zu erkennen. Die das Innenprofil 7 ebenso durchdringende Materialausnehmung 9b1 ist direkt unter der Materialausnehmung 9a4 des Außenprofils 8 angeordnet. Die Materialausnehmung 9b1 ist in Form und Länge gleich zur Materialausnehmung 9a4 des Außenprofils 8 ausgebildet. Damit ergibt sich am Profil 4 ein Doppelschlitz. Die in Fig. 3 dargestellte Schweißnaht 11 ist in diesem Fall voll durchgeschweißt.

Die stoffschlüssigen Verbindungen 10a im Bereich der Materialausnehmungen 9a1 bis 9a8 bzw. 9b1 erhöhen im gekrümmten Profilabschnitt 6 nicht nur die mechanische Belastbarkeit, sondern sorgen auch für eine verbesserte Formstabilität bei mechanischen Belastungen. Durch Verwendung des erfindungsgemäßen Profils 4 kann daher die Sicherheit der Kabine 1 besonders gesteigert werden. Anstatt einer Schweißverbindung mit Schweißnaht 11 ist auch eine Lötverbindung vorstellbar, was nicht näher dargestellt worden ist.

Nach Fig. 1 sind mehrere gekrümmte Profilabschnitte 6 eingezeichnet. Beispielsweise ist es auch vorstellbar, dass am s-förmig verlaufenden Profilen 4 für jeden gekrümmten Profilabschnitt 6 ein Innenprofil 8 im Außenprofil 7 oder für beide gekrümmten Profilabschnitt 6 ein einzelnes Innenprofil 8 im Außenprofil 7 eingesetzt ist.

Wie zudem der Fig. 2 zu entnehmen ist, weisen alle Materialausnehmungen 9a1 bis 9a8 einen sich quer zur Längsrichtung L des Profils 4 erstreckenden Verlauf auf. Die Materialausnehmungen 9a1 bis 9a8 sind an der Innenseite des gekrümmten Profilabschnitts des Profils 4 vollständig verlaufend vorgesehen. Daran direkt anschließend verlaufen die Materialausnehmungen 9a1 bis 9a8 auch an den beiden Seitenflächen 4c, 4d des gekrümmten Profilabschnitts 6 und enden mit einem Abstand A1 vor der Außenfläche 4b des gekrümmten Profilabschnitts 6. Damit ergibt sich ein u-förmiger Verlauf am Profil 4 bzw. im Ausführungsbeispiel am Außenprofil 7.

Konstruktiv vereinfacht ausgeführt, weisen die Materialausnehmungen 9a bis 9h eine Schlitzform auf. Die Schweißnähte 11 sind als schmelzgeschweißte volle Schlitznähte ausgeführt.

Zudem sind diese Materialausnehmungen 9a1 bis 9a8 auf einem zweiten Abstand A2 nebeneinander vorgesehen, parallel verlaufend und weisen allesamt über ihrer Länge eine im Wesentlichen gleiche Öffnungsbreite W auf, die dies beispielsweise in Fig. 4 erkannt werden kann.

Die Materialausnehmungen 9a1 bis 9a8 des Außenprofils 8 werden im Verlauf von Distanzhaltern 12 gebrochen, die an der jeweils gegenüberliegenden Längskante 13a der Materialausnehmungen 9a1 bis 9a8 anliegen. Damit kann die Öffnungsbreite W der Materialausnehmungen 9a1 bis 9a8 standfest festgelegt werden -dies auch exakt, und zwar auch nach dem Biegen des Profils 4, kann das stoffschlüssige Fügen erleichtert und so für ein formgenaues Profil 4 gesorgt werden.

Zudem ist in Fig. 3 an der Materialausnehmung 9a8 strichliert eine formschlüssige Verbindung 10b zu erkennen, welche Materialausnehmung 9a8 auch eine nicht näher dargestellte stoffschlüssige Verbindung 10a aufweist. Diese formschlüssige Verbindung 10b kann -wie dargestellt- ein Stift als Verbindungselement 14 oder eine in eine Ausnehmung des Innenprofils 7 eingreifende Materialzunge 15 des Außenprofils 8 sein.

Beispielsweise kann es ausreichen, eine einzige formschlüssige Verbindung 10b vorzusehen, um dieses im Außenprofil 8 standfest zu positionieren, bevor der gekrümmt verlaufende Profilabschnitt 6 ausgebildet wird. Dies erhöht die Reproduzierbarkeit des Herstellverfahrens und/oder die Standfestigkeit des Profils 4.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably", und für "gegebenenfalls", ins Englische übersetzt als "if necessary".

## Patentansprüche

1. Profil (4), insbesondere Hohlprofil, das zumindest einen, in dessen Längsrichtung (L) gekrümmt und/oder geknickt verlaufenden Profilabschnitt (6) aufweist, mit einem über den gekrümmt und/oder geknickt verlaufenden Profilabschnitt (6) des Profils (4) verlaufenden Außenprofil (7), insbesondere aus Metall, und mit einem zumindest abschnittsweise im gekrümmten Profilabschnitt (6) und innerhalb des Außenprofils (7) vorgesehenen Innenprofil (8), insbesondere aus Metall, **dadurch gekennzeichnet, dass** das Außenprofil (7) im gekrümmten und/oder geknickten Profilabschnitt (6) zumindest eine, insbesondere mit zumindest einem Zusatzwerkstoff hergestellte, stoffschlüssige Verbindung (10a), und gegebenenfalls eine formschlüssige Verbindung (10b) zwischen Innen- und Außenprofil (7, 8) aufweist, welche Verbindung (10a, 10b) zumindest im Bereich einer das Außenprofil (7) durchdringenden Materialausnehmung (9a1 bis 9a8) eingebracht ist.

2. Profile nach Anspruch 1, **dadurch gekennzeichnet, dass** die stoffschlüssige Verbindung (10a) eine, insbesondere schmelzgeschweißte, Schweißnaht (11), insbesondere Schlitznaht, beispielsweise volle Schlitznaht, eine Lötverbindung oder eine Klebeverbindung ist und/oder dass die formschlüssige Verbindung (10b) ein Verbindungselement (14) oder eine in das Innenprofil (7) eingreifende Materialzunge (15) des Außenprofils (8) aufweist.

3. Profil nach einem der Ansprüche 1 bis 2, **dadurch gekennzeichnet, dass** die Materialausnehmung (9a1 bis 9a8) zumindest abschnittsweise einen, insbesondere quer, zur Längsrichtung (L) des Profils (4) geneigten Verlauf aufweist.

4. Profil nach einem der Ansprüche 1 bis 3, **dadurch gekennzeichnet, dass** die Materialausnehmung (9a1 bis 9a8) zumindest an der Innenfläche (4a) des gekrümmten und/oder geknickten Profilabschnitts (6) des Profils (4), insbesondere vollständig, verlaufend vorgesehen ist.

5. Profil nach einem der Ansprüche 1 bis 4, **dadurch gekennzeichnet, dass** die Materialausnehmung (9a1 bis 9a8) an zumindest einer Seitenfläche, insbesondere an beiden Seitenflächen, des gekrümmten und/oder geknickten Profilabschnitts (6) verlaufend vorgesehen ist.

6. Profil nach Anspruch 5, **dadurch gekennzeichnet, dass** die Materialausnehmung (9a1 bis 9a8) an der betreffenden Seitenfläche an die Innenfläche (4a) des gekrümmten und/oder geknickten Profilabschnitts (6) anschließt und in Richtung der Außenfläche (4b) des gekrümmten und/oder geknickten Profilabschnitts (6) verläuft, und/oder dass die Materialausnehmung (9a1 bis 9a8) mit einem ersten Abstand (A1) vor der Außenfläche (4b) oder im Übergangsbereich zu dieser Außenfläche (4b) des gekrümmten und/oder geknickten Profilabschnitts (6) endet.

7. Profil nach einem der Ansprüche 1 bis 6, **dadurch gekennzeichnet, dass** die Materialausnehmung (9a1 bis 9a8) als Schlitz ausgeführt ist und/oder dass die Materialausnehmung (9a1 bis 9a8) u-förmig am Profil (4) verlaufend ist.

8. Profil nach einem der Ansprüche 1 bis 7, **dadurch gekennzeichnet, dass** mehrere Materialausnehmungen (9a1 bis 9a8) auf einen zweiten Abstand (A2) nebeneinander, insbesondere parallel, verlaufend vorgesehen sind und/oder dass die Materialausnehmung (9a1 bis 9a8) über ihre Länge einen im Wesentlichen gleiche Öffnungsbreite (W) aufweist.

9. Profil nach einem der Ansprüche 1 bis 8, **dadurch gekennzeichnet, dass** die Materialausnehmung (9a1 bis 9a8) in deren Verlauf von zumindest einem, vom betreffenden Außenprofil (7) oder Innenprofil (8) ausgeformten, insbesondere frei, auskragenden Distanzhalter (12) unterbrochen wird.

10. Profil nach einem der Ansprüche 1 bis 9, **dadurch gekennzeichnet, dass** die Verbindung (10a, 10b) zudem im Bereich einer das Innenprofil (8) durchdringenden Materialausnehmung (9b1) eingebracht ist, die direkt an die Materialausnehmung (9a1 bis 9a8) des Außenprofils (7) anschließt.

11. Profil nach einem der Ansprüche 1 bis 10, **dadurch gekennzeichnet, dass** die stoffschlüssige Verbindung (10a) die Materialausnehmung (9a1 bis 9a8) vollständig in deren Erstreckung und/oder Tiefe ausfüllt.

12. Profil nach einem der Ansprüche 1 bis 11, **dadurch gekennzeichnet, dass** das Innenprofil (8) im gekrümmten und/oder geknickten Profilabschnitt (6) durchgehend verlaufend ist und gegebenenfalls in zumindest einen, insbesondere in beiden, daran anschließenden in Längsrichtung (L) des Profils (4) gerade verlaufenden Profilabschnitt (6a, 6b) des Profils (4) vorkragt.

13. Kabine mit einem Profil (4) nach einem der Ansprüche 1 bis 12, insbesondere als Teil eines Kabinenrahmens der Kabine, beispielsweise als Säule, insbesondere B-Säule.

14. Fahrzeug, insbesondere Traktor, mit einem Profil (4) nach einem der Ansprüche 1 bis 13 oder mit einer Kabine nach Anspruch 14.

15. Verfahren zur Herstellung eines Profils (1) nach einem der Ansprüche 1 bis 12, bei dem ein Außenprofil (7) mit zumindest eine dieses durchdringende Materialausnehmung (9a1 bis 9a8) und ein Innenprofil (8) mit gegebenenfalls zumindest eine dieses durchdringende Materialausnehmung (9b1) bereitgestellt oder hergestellt werden, das Innenprofil (8) in das Außenprofil (7) eingesetzt, insbesondere eingeschoben, wird, dann das Außenprofil (7) und Innenprofil (8) derart gemeinsam umgeformt, insbesondere gebogen, werden, dass sich am Profil (4) ein in dessen Längsrichtung (L) gekrümmt und/oder geknickt verlaufender Profilabschnitt (6) mit der Materialausnehmung (9a1 bis 9a8 bzw. 9b1) in diesem Profilabschnitt (6) ausbildet, und in einem weiteren Schritt an zumindest der Materialausnehmung (9a1 bis 9a8) des Außenprofils (7) zumindest eine stoffschlüssige Verbindung (10a), insbesondere mit zumindest einen Zusatzwerkstoff, zwischen Innen- und Außenprofil (7, 8) hergestellt wird.

16. Verfahren nach Anspruch 15, **dadurch gekennzeichnet, dass** vor dem gemeinsamen Umformen eine formschlüssige Verbindung (10b) zwischen dem Innen- und Außenprofil (7, 8) hergestellt wird.
